# FASCICULE DE BREVET EUROPEEN

(11) **EP 3 455 603 B1**
(45) Date de publication et mention de la délivrance du brevet: **01.04.2020**
(21) Numéro de dépôt: 17723060.4
(22) Date de dépôt: 09.05.2017
(51) Int. Cl.: G01N 1/22

(54) **CASSETTE AMOVIBLE POUR APPAREIL DE PRELEVEMENT DE NANOPARTICULES PRESENTS DANS UN AEROSOL, ET ENSEMBLE DE FILTRATION POUR UNE TELLE CASSETTE**
ABNEHMBARE KASSETTE FÜR EINE VORRICHTUNG ZUR ENTNAHME VON NANOPARTIKELN IN EINEM AEROSOL UND FILTERANORDNUNG FÜR SOLCH EINE KASSETTE
REMOVABLE CASSETTE FOR AN APPARATUS FOR SAMPLING NANOPARTICLES PRESENT IN AN AEROSOL, AND FILTRATION ASSEMBLY FOR SUCH A CASSETTE

(30) Priorité: 13.05.2016 FR 1654316
(43) Date de publication de la demande: 20.03.2019
(73) Titulaire: Particlever, 75008 Paris (FR)
(72) Inventeur: DE THOURY, Raphaël, 77183 Croissy-Beauborg (FR)
(74) Mandataire: Decorchemont, Audrey Véronique Christèle
(86) Numéro de dépôt international: PCT/EP2017/061060
(87) Numéro de publication internationale: WO 2017/194541

(56) Documents cités:
- EP-A1- 0 692 294
- EP-A2- 0 982 062
- FR-A1- 2 992 227
- US-A- 4 148 732
- US-A- 6 033 455
- US-A- 6 131 573

## Description

L'invention concerne une cassette amovible pour appareil de prélèvement de nanoparticules présentes dans un aérosol, et un ensemble de filtration pour une telle cassette.

### ARRIERE-PLAN TECHNOLOGIQUE DE L'INVENTION

On connaît du document FR3022025 un appareil de prélèvement de nanoparticules équipé de moyens d'aspiration d'aérosol, et sur lequel est rapportée une cassette amovible formant un tunnel avec une entrée ouverte sur l'extérieur et une sortie adaptable à étanchéité sur une entrée d'aspiration du dispositif de prélèvement. Le tunnel est barré par un ensemble de filtration de sorte que l'aérosol aspiré par le tunnel passe au travers du filtre de l'ensemble de filtration. Celui-ci arrête et retient les nanoparticules de l'aérosol aspiré passant par le tunnel.

La cassette amovible comprend un pied comportant des moyens de solidarisation à l'appareil de prélèvement, et un chapeau rapporté sur le pied pour emprisonner l'ensemble de filtration entre le pied et le chapeau. L'ensemble de filtration comporte un support annulaire venu de matière avec le filtre lui-même. L'étanchéité du tunnel est assurée par un joint d'étanchéité plat interposé entre le support annulaire et le pied.

Pour des raisons d'industrialisation, il est envisagé d'utiliser un ensemble de filtration comme celui illustré dans le document FR2992227. Cet ensemble de filtration comporte une membrane filtrante portée par un support annulaire comportant un redan périphérique sur l'apex duquel vient reposer la membrane filtrante. Le support annulaire est recouvert par une bague s'enfilant autour du redan pour pincer la périphérie du filtre entre la bague et le support et ainsi tendre la membrane de sorte qu'elle présente une paroi plane propice à l'analyse.

Il importe de faire en sorte qu'aucun passage ne puisse constituer un court-circuit permettant à l'aérosol aspiré de ne pas passer par le filtre, ou de passer par le filtre mais sans venir de l'entrée du tunnel, par exemple en se faufilant par un passage entre le pied et le chapeau de la cassette.

### OBJET DE L'INVENTION

L'invention a pour objet de proposer une disposition particulière des constituants de la cassette amovible améliorant l'efficacité et la fiabilité du prélèvement, et facilitant la manipulation de l'ensemble de filtration.

### PRESENTATION DE L'INVENTION

En vue de la réalisation de ce but, on propose tout d'abord un ensemble de filtration pour arrêter et retenir des nanoparticules en suspension dans un aérosol traversant l'ensemble de filtration, l'ensemble de filtration comportant un support annulaire qui comprend un redan annulaire présentant un apex sur lequel vient reposer une membrane filtrante, et un couvercle recouvrant le support annulaire pour maintenir une périphérie de la membrane entre le couvercle et le support annulaire. Selon l'invention, le couvercle comprend une bague s'enfilant autour du redan pour pincer la périphérie de la membrane entre la bague et le support annulaire, la bague étant prolongée d'une jupe qui s'étend en saillie de la bague pour recouvrir une paroi périphérique externe du support annulaire et pour présenter une face d'extrémité qui s'étend en continuité d'une face d'appui du support annulaire, la jupe (22) se terminant par des moyens d'encliquetage sur le support annulaire (12).

La jupe remplit plusieurs fonctions :
- elle facilite l'étanchéité de la cassette. En effet, avant de placer un tel ensemble de filtration dans une cassette amovible de sorte à être pincé entre le pied et le chapeau de la cassette, il suffit de disposer un premier joint d'étanchéité s'étendant simultanément contre lesdites faces pour fermer un premier passage entre le support annulaire et le couvercle, ce qui empêche l'aérosol aspiré par le tunnel de court-circuiter la membrane filtrante, tandis qu'un deuxième joint d'étanchéité disposé entre le chapeau et le couvercle pour fermer un deuxième passage entre le pied et le chapeau empêche l'aérosol qui pourrait être aspiré par un passage entre le pied et le chapeau de s'ajouter à l'aérosol aspiré par le tunnel ;
- elle facilite la manipulation de l'ensemble de filtration. En effet, l'ensemble de filtration peut être saisi par la face externe périphérique de la jupe, par exemple par une pince ;

De préférence, la jupe et la bague du couvercle sont venues de matière.

L'invention est également relative à une cassette amovible pour appareil de prélèvement de nanoparticules, la cassette comportant :
- Un pied comportant des moyens de sa solidarisation sur un appareil de prélèvement de nanoparticules, et un chapeau venant s'adapter sur le pied et qui définit avec le pied un tunnel ayant une entrée ouverte sur l'extérieur et une sortie adaptable à étanchéité sur une entrée d'aspiration de l'appareil de prélèvement ;
- Un ensemble de filtration tel qu'exposé ci-dessus pincé entre le pied et le chapeau ;
- Un premier joint d'étanchéité disposé pour s'étendre simultanément contre lesdites faces pour fermer un passage entre le support annulaire et le couvercle, et un deuxième joint d'étanchéité disposé contre le couvercle pour fermer un passage entre le pied et le chapeau.

Selon un mode particulier de l'invention, les deux joints d'étanchéité sont des joints plats disposés de part et d'autre de l'ensemble de filtration avant son pincement par le pied et le chapeau.

Selon un mode de réalisation particulier de réalisation de l'invention, la jupe se termine par un renfort propre à assurer un encliquetage du couvercle sur le support annulaire lorsque le couvercle est rapporté sur le support annulaire. Ainsi l'ensemble de filtration peut être facilement manipulé en étant tenu par la jupe, sans que celle-ci ne risque de glisser du support annulaire.

### DESCRIPTION DES FIGURES

L'invention sera mieux comprise à la lumière de la description qui suit d'un mode particulier de réalisation de l'invention, en référence aux figures des dessins annexés parmi lesquelles :
- la figure 1 est une vue en perspective partielle d'un appareil de prélèvement muni d'une cassette amovible ;
- la figure 2 est une vue en perspective éclatée d'une cassette amovible selon l'invention ;
- la figure 3 est une vue en coupe partielle de la cassette amovible de la figure 2 ;
- la figure 4 est une vue agrandie de la figure 3 ;
- la figure 5 est une vue similaire à la figure 4 d'une variante de réalisation de la cassette de l'invention ;
- la figure 6 est une section d'un premier joint d'étanchéité utilisable dans les cassettes des figures 2 à 5.

### DESCRIPTION DETAILLEE DE MODES PARTICULIERS DE REALISATION DE L'INVENTION

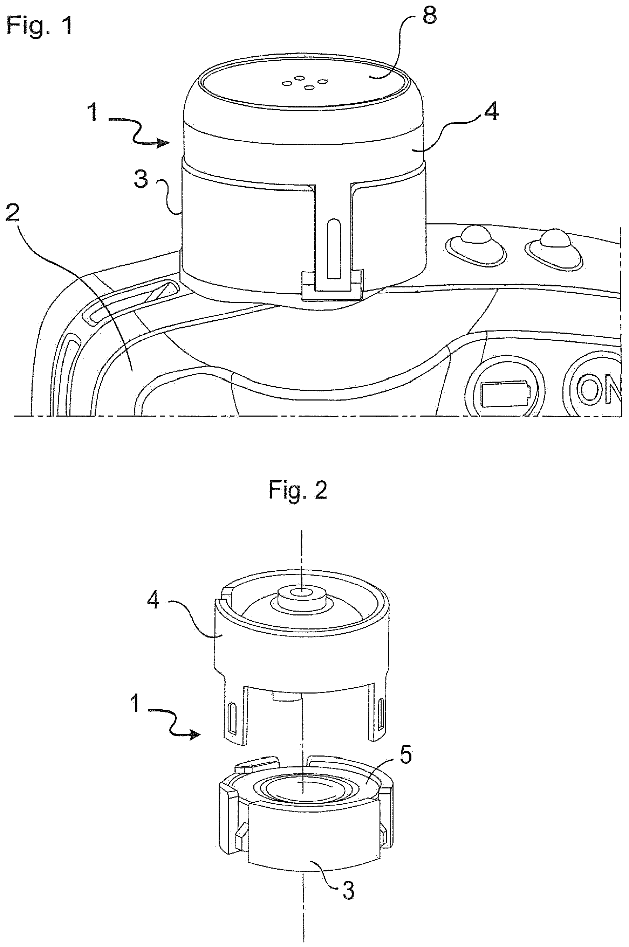

En référence à la figure 1, et de façon connue en soi, l'invention vise plus particulièrement une cassette amovible 1 adaptable sur un appareil de prélèvement 2 équipé de moyens d'aspiration pour aspirer un aérosol au travers d'un tunnel formé dans la cassette 1. Comme illustré à la figure 2, la cassette amovible 1 comporte un pied 3 sur lequel un chapeau 4 est rapporté (ici par encliquetage) pour emprisonner entre eux un ensemble de filtration 5.

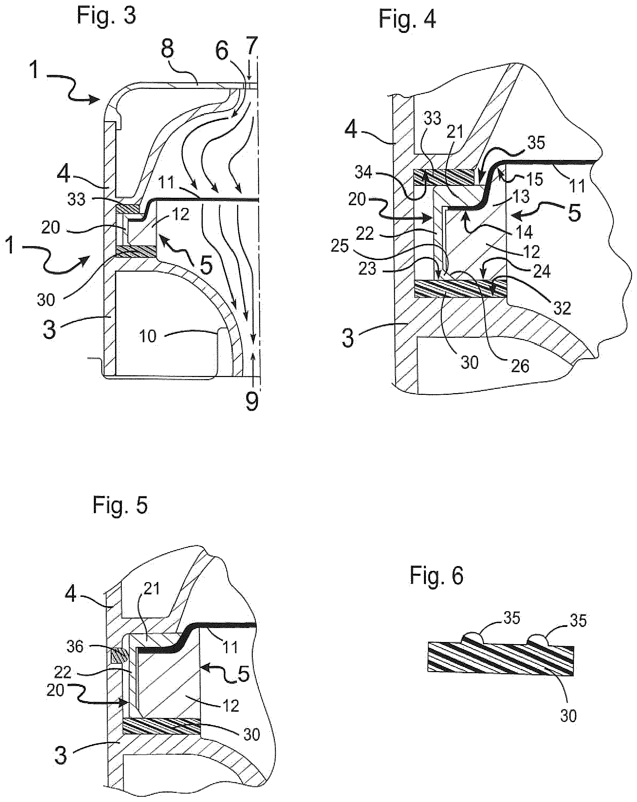

Comme illustré aux figures 3 et 4, le pied 3 et le chapeau 4 sont de révolution et définissent intérieurement un tunnel 6 qui s'étend depuis une entrée 7 protégée par un cache 8 percé au niveau de l'entrée 7, jusqu'à une sortie 9 qui vient s'adapter dans une entrée 10 des moyens d'aspiration de l'appareil de prélèvement 2. Le tunnel 6 est entièrement barré par une membrane filtrante 11 de l'ensemble de filtration 5. Ainsi, l'aérosol aspiré par l'appareil de prélèvement entre dans le tunnel 6 par l'entrée 7, et sort par la sortie 9 en ayant traversé la membrane filtrante 11 qui retient les nanoparticules en suspension dans l'aérosol aspiré. La cassette amovible 1 est rapportée par tout moyen connu (encliquetage, vissage ...) permettant son démontage en vue de l'analyse des nanoparticules captées et retenues par la membrane filtrante 11. Tout ceci est parfaitement connu et n'est rappelé qu'à titre d'illustration de l'invention.

L'ensemble de filtration 5 comporte un support annulaire 12, par exemple en polyamide, qui comprend un redan 13 annulaire qui s'étend en saillie d'une face plane 14 du support annulaire 12 pour présenter un apex 15 sur lequel la membrane filtrante 11 vient s'appuyer. La membrane filtrante 11 se prolonge au-delà de l'apex 15 pour reposer sur la face plane 14. Le support annulaire 12 est recouvert d'un couvercle 20, par exemple en polycarbonate, qui comprend une bague 21 rapportée sur le support annulaire 12 pour pincer la membrane filtrante 11 entre la bague 21 et la face externe du redan 13. A cet effet, le couvercle 20 est engagé à force pour pincer et tendre la membrane filtrante 11, qui forme alors une surface plane propice à une analyse ultérieure. La bague 21 emprisonne en outre une partie périphérique de la membrane filtrante 11 reposant sur la face plane 14 du support annulaire 12. Conformément à l'invention, la bague 21 est prolongée par une jupe 22, ici venue de matière avec la bague 21, qui s'étend pour recouvrir une face périphérique du support annulaire 12, et se prolonge jusqu'à une face d'extrémité 23 qui s'étend dans le prolongement d'une face d'appui 24 du support annulaire, opposée à la face plane 14 sur laquelle repose la membrane filtrante 11.

Ici, la jupe 22 est terminée par un renfort périphérique 25 présentant une légère contre-dépouille venant coopérer avec une partie chanfreinée 26 du support annulaire 12 pour permettre un encliquetage du couvercle 20 sur le support annulaire 12 lors du montage de l'ensemble de filtration 5. Lors du montage, il faut forcer le renfort 25 autour de la face périphérique du support 12, faire coulisser le couvercle 20 autour du support annulaire 12, jusqu'à ce que le renfort 25 vienne s'encliqueter autour de la partie chanfreinée 26 du support annulaire 12. De préférence, l'encliquetage instaure une pression de la bague 21 contre la face d'appui 14 du support annulaire. L'ensemble peut alors être facilement manipulé en étant tenu par la jupe 22, par exemple au moyen d'une pince d'un bras robotisé.

Lors du montage de l'ensemble de filtration 5 dans la cassette amovible 1, on interpose un premier joint d'étanchéité 30, ici un joint plat en matière élastomère, qui s'étend d'une part contre une face plane 32 du pied 3, et d'autre part de façon simultanée contre la face d'extrémité 23 de la jupe 22 et contre la face d'appui 24 du support annulaire 12. Le premier joint d'étanchéité 30 ferme un éventuel passage entre le support annulaire 12 et le couvercle 20, empêchant un court-circuit de la membrane 11 par ce passage.

Par ailleurs, on interpose un deuxième joint d'étanchéité 33, ici un joint d'étanchéité plat en matière élastomère, qui s'étend contre une face plane 34 du chapeau 4 et une face d'appui 35 de la bague 21. Le deuxième joint d'étanchéité 32 supprime toute possibilité que de l'aérosol aspiré par un espace entre le pied 3 et le chapeau 4 puisse s'ajouter à l'aérosol aspiré par l'entrée 7 du tunnel 6.

Les joints d'étanchéité sont bien entendu pressés lors de l'encliquetage du chapeau 4 sur le pied 3. En variante illustrée à la figure 5, le deuxième joint d'étanchéité 33 est ici remplacé par un joint torique 36 reçu dans une gorge annulaire du chapeau 4 pour prendre appui contre une face externe de la jupe 22. Ce joint torique a le même effet que le joint plat qu'il remplace.

En particulier, bien que dans les exemples illustrés, les cassettes amovibles soient pourvues d'un deuxième joint d'étanchéité, celui-ci peut être omis si le pied et le chapeau sont prévus pour, lors de leur assemblage, obstruer à étanchéité tout passage entre eux, par exemple par interposition d'un joint entre ces deux éléments.

Bien que dans les exemples illustrés, la jupe est venue de matière avec la bague, on pourra prévoir un couvercle en deux parties. En particulier, la jupe pourra être réalisée en un matériau plus souple que la bague, facilitant son encliquetage sur le support annulaire. A cet égard, bien qu'ici, les moyens d'encliquetage de la jupe sur le support annulaire comportent un renfort terminal à contre-dépouille de la jupe coopérant avec une partie chanfreinée du support annulaire, on pourra prévoir tous autres moyens d'encliquetage, de préférence assurant une pression de la bague contre la face du support annulaire sur laquelle vient s'appuyer la membrane filtrante 11.

Enfin, les joints d'étanchéité utilisés pourront être de toute forme possible. En particulier, comme illustré à la figure 6, le premier joint d'étanchéité 30 pourra comporter des bourrelets annulaires 35 s'appuyant respectivement sur la face d'extrémité de la jupe et la face d'appui du support annulaire.

## Revendications

1. Ensemble de filtration (5) pour arrêter et retenir des nanoparticules en suspension dans un aérosol traversant l'ensemble de filtration, l'ensemble de filtration comportant un support annulaire (12) qui comprend un redan annulaire (13) présentant un apex sur lequel vient reposer une membrane filtrante (11), et un couvercle (20) recouvrant le support annulaire pour maintenir une périphérie de la membrane entre le couvercle et le support annulaire, **caractérisé en ce que** le couvercle comprend une bague (21) s'enfilant autour du redan pour pincer la périphérie de la membrane entre la bague et le support annulaire, la bague étant prolongée d'une jupe (22) qui s'étend en saillie de la bague pour recouvrir une paroi périphérique externe du support annulaire et pour présenter une face d'extrémité (23) qui s'étend en continuité d'une face d'appui (24) du support annulaire, la jupe (22) se terminant par des moyens d'encliquetage sur le support annulaire (12).

2. Ensemble de filtration selon la revendication 1, dans lequel la bague (21) et la jupe (22) du couvercle sont venus de matière.

3. Ensemble de filtration selon la revendication 1, dans lequel les moyens d'encliquetage comportent un renfort annulaire (25) présentant une contre-dépouille, destinée à coopérer avec une partie chanfreinée (26) du support annulaire.

4. Cassette amovible pour appareil de prélèvement de nanoparticules, comportant un pied (3) adaptable de façon amovible sur l'appareil de filtration, un chapeau (4) rapporté sur le pied, et un ensemble de filtration selon l'une des revendications précédentes pincé entre le pied (3) et le chapeau (4).

5. Cassette amovible selon la revendication 4, comportant un premier joint d'étanchéité (30) disposé entre le pied (3) et l'ensemble de filtration (5) pour s'étendre simultanément contre la face d'extrémité (23) de la jupe (22) et la face d'appui (24) du support annulaire (12).

6. Cassette amovible selon la revendication 5, dans laquelle le premier joint d'étanchéité (30) est un joint plat en matière élastomère.

7. Cassette amovible selon la revendication 4, comportant un deuxième joint d'étanchéité (33 ; 36) disposé entre le chapeau (4) et le couvercle (20) de l'ensemble de filtration.

8. Cassette amovible selon la revendication 7, dans laquelle le deuxième joint d'étanchéité (33) est un joint plat en matière élastomère disposé pour s'appuyer sur une face plane (35) de la bague (21) du couvercle (20).

9. Cassette amovible selon la revendication 7, dans laquelle le deuxième joint d'étanchéité (36) est un joint torique disposé pour s'appuyer sur une face externe de la jupe du couvercle.

## Patentansprüche

1. Filteranordnung (5) zum Auffangen und Zurückhalten von Nanopartikeln in Suspension in einem Aerosol, das durch die Filteranordnung hindurchgeht, wobei die Filteranordnung einen ringförmigen Träger (12) umfasst, der eine ringförmige Stufe (13) enthält, die einen Scheitel aufweist, auf dem eine Filtermembran (11) ruht, und eine Abdeckung (20), die den ringförmigen Träger abdeckt, um einen Umfang der Membran zwischen der Abdeckung und dem ringförmigen Träger zu halten, **dadurch gekennzeichnet, dass** die Abdeckung einen Ring (21) umfasst, der um die Stufe herum aufgezogen ist, um den Umfang der Membran zwischen dem Ring und dem ringförmigen Träger einzuklemmen, wobei der Ring von einer Schürze (22) verlängert wird, die von dem Ring vorsteht, um eine äußere Umfangswand des ringförmigen Trägers abzudecken und eine Endfläche (23) aufzuweisen, die sich in Kontinuität mit einer Anlagefläche (24) des ringförmigen Trägers erstreckt, wobei die Schürze (22) mit Rastmitteln zum Einrasten auf dem ringförmigen Träger (12) abschließt.

2. Filteranordnung nach Anspruch 1, bei der der Ring (21) und die Schürze (22) der Abdeckung aus einem Material stammen.

3. Filteranordnung nach Anspruch 1, bei der die Rastmittel eine ringförmige Verstärkung (25) umfassen, die eine Unterschneidung aufweist, die dazu bestimmt ist, mit einem abgeschrägten Teil (26) des ringförmigen Trägers zusammenzuwirken.

4. Abnehmbare Kassette für eine Vorrichtung zur Probennahme von Nanopartikeln, umfassend einen Fuß (3), der auf abnehmbare Weise an dem Filtergerät anbringbar ist, eine Kappe (4), die an dem Fuß befestigt ist, und eine Filteranordnung nach einem der vorhergehenden Ansprüche, die zwischen dem Fuß (3) und der Kappe (4) eingeklemmt ist.

5. Abnehmbare Kassette nach Anspruch 4, umfassend eine erste Dichtung (30), die so zwischen dem Fuß (3) und der Filteranordnung (5) angeordnet ist, dass sie sich gleichzeitig an der Endfläche (23) der Schürze (22) und der Anlagefläche (24) des ringförmigen Trägers (12) erstreckt.

6. Abnehmbare Kassette nach Anspruch 5, bei der die erste Dichtung (30) eine Flachdichtung aus elastomerem Material ist.

7. Abnehmbare Kassette nach Anspruch 4, umfassend eine zweite Dichtung (33; 36), die zwischen der Kappe (4) und der Abdeckung (20) der Filteranordnung angeordnet ist.

8. Abnehmbare Kassette nach Anspruch 7, bei der die zweite Dichtung (33) eine Flachdichtung aus elastomerem Material ist, die so angeordnet ist, dass sie an einer ebenen Fläche (35) des Rings (21) der Abdeckung (20) anliegt.

9. Abnehmbare Kassette nach Anspruch 7, bei der die zweite Dichtung (36) eine O-Ring-Dichtung ist, die so angeordnet ist, dass sie an einer Außenfläche der Schürze der Abdeckung anliegt.

## Claims

1. A filtration assembly (5) for halting and retaining nanoparticles in suspension in an aerosol passing through the filtration assembly, the filtration assembly comprising an annular support (12) which comprises an annular step (13) having an apex on which a filter membrane (11) rests, and a cover (20) covering the annular support to hold a periphery of the membrane between the cover and the annular support, **characterized in that** the cover comprises a ring (21) that can be slipped around the step to sandwich the periphery of the membrane between the ring and the annular support, the ring being extended by a skirt (22) which projects out from the ring to cover an external peripheral wall of the annular support and to have an end face (23) which extends in continuity with a bearing face (24) of the annular support, the skirt (22) ending in means for clip fastening onto the annular support (12).

2. The filtration assembly as claimed in claim 1, in which the ring (21) and the skirt (22) of the cover are formed in one material.

3. The filtration assembly as claimed in claim 1, in which the clip-fastening means comprise an annular reinforcement (25) exhibiting an undercut intended to collaborate with a chamfered part (26) of the annular support.

4. A removable cassette for an apparatus for sampling nanoparticles, comprising a base (3) that can be fitted removably onto the filtration apparatus, a cap (4) attached to the base and a filtration assembly as claimed in one of the preceding claims sandwiched between the base (3) and the cap (4).

5. The removable cassette as claimed in claim 4, comprising a first seal (30) positioned between the base (3) and the filtration assembly (5) to extend simultaneously against the end face (23) of the skirt (22) and the bearing face (24) of the annular support (12).

6. The removable cassette as claimed in claim 5, in which the first seal (30) is a flat seal made of elastomer.

7. The removable cassette as claimed in claim 4, comprising a second seal (33; 36) positioned between the cap (4) and the cover (20) of the filtration assembly.

8. The removable cassette as claimed in claim 7, in which the second seal (33) is a flat seal made of elastomer positioned in such a way as to bear against a flat face (35) of the ring (21) of the cover (20).

9. The removable cassette as claimed in claim 7, in which the second seal (36) is an O ring seal positioned in such a way as to bear against an external face of the skirt of the cover.
